# EUROPÄISCHE PATENTSCHRIFT

(11) **EP 0 987 141 B1**
(45) Veröffentlichungstag und Bekanntmachung des Hinweises auf die Patenterteilung: **03.12.2003**
(21) Anmeldenummer: 99115079.8
(22) Anmeldetag: 05.08.1999
(51) Int. Cl.: B60N 2/28

(54) **Rückhaltesystem für einen in einem Kraftfahrzeug mitgeführten Kindersitz**
Restraint system for a child seat carried in a motor vehicle
Système de retenue pour un siège d'enfant emporté dans un véhicule automobile

(30) Priorität: 18.09.1998 DE 19842823
(43) Veröffentlichungstag der Anmeldung: 22.03.2000
(73) Patentinhaber: Volkswagen Aktiengesellschaft, 38436 Wolfsburg (DE)
(72) Erfinder: Schweissgut, Jakob, Dipl.-Ing., 38542 Leiferde (DE)
(74) Vertreter: Schneider, Henry, Dipl.-Ing.

(56) Entgegenhaltungen:
- EP-A- 0 552 570
- EP-A- 0 901 935
- DE-C- 19 738 802
- DE-C- 19 850 255

## Beschreibung

Die Erfindung betrifft ein Rückhaltesystem für einen in einem Kraftfahrzeug mitgeführten, auf einem Fahrzeugsitz abgestellten Kindersitz nach dem Oberbegriff des Anspruchs 1.

Bei den meisten herkömmlichen Rückhaltesystemen für Kindersitze werden die in einem Fahrzeug vorhandenen Sicherheitsgurte verwendet, mit deren Hilfe der Kindersitz auf einem Sitz des Fahrzeugs, gewöhnlich auf einem Rücksitz, befestigt wird. Diese Art der Befestigung ist relativ instabil und in der Handhabung aufwendig, wobei Fehler bei der Befestigung nicht ausschließbar sind.

Um hier bezüglich der Handhabung und für eine stabile Kindersitzanbindung Verbesserungen zu schaffen, wird unter der Bezeichnung ISOFIX-Kindersitzsystem bereits ein gattungsgemäßes Rückhaltesystem für einen in einem Kraftfahrzeug mitgeführten Kindersitz angeboten. Dieses Rückhaltesystem umfaßt wenigstens zwei beabstandete Rastteile, die mit dem Sitz oder in dessen Nähe mit einem Karosserieteil verbunden sind und die im Bereich zwischen der Sitzfläche und der Unterseite der Sitzlehne liegen. Weiter umfaßt dieses Rückhaltesystem den Rastteilen zugeordnete Schloßteile an unteren hinteren Sitzbereichen des Kindersitzes, die mit Rastteilen zur Halterung des Kindersitzes in Eingriff bringbar sind. Diese Schloßteile sind als Hakenfallen mit federbelasteten Rastnasen ausgebildet, die an vorzugsweise am Kindersitz nach hinten ausfahrbaren Auslegern angebracht sind. Zum Einbau des Kindersitzes wird dieser auf einem Fahrzeugsitz abgestellt, und die Schloßteile bzw. Hakenfallen werden über die Rastteile gesteckt, bis ein hörbarer und fühlbarer Rasteingriff erfolgt. Zum Ausbau des Kindersitzes wird ein Bediengriff betätigt, der über Zugseile mit den Rastnasen der Hakenfallen verbunden ist und diese für eine Abnahme des Kindersitzes wieder freigibt.

Es ist weiter bekannt, insbesondere bei Frontsitzen die zwei beabstandeten Rastteile als gekoppelte Schwenkbügel auszubilden. Diese sind zwischen der Sitzfläche und der Lehnenunterseite des Fahrzeugsitzes gelagert und von einer versenkten, etwa in Fahrzeugquerrichtung liegenden, hinteren Ruhestellung in eine zur Sitzfläche vorstehenden, etwa in Fahrzeuglängsrichtung liegenden Bereitschaftsstellung schwenkbar. Nur in dieser Bereitschaftsstellung sind die Schloßteile am Kindersitz mit den Rastteilen am Fahrzeugsitz in Eingriff bringbar. In der versenkten Ruhestellung der Schwenkbügel wird erreicht, daß diese bei der Sitzbenutzung nicht stören. Der Schwenkvorgang ist durch einen an der Sitzseite angebrachten Druckknopf ausführbar.

Document EP-A-552 570 offenbart ein Rückhaltesystem für einen Kindersitz nach dem Oberbegriff des Anspruchs 1.

Die Rastteile sind hier unmittelbar am Fahrzeugsitz angebracht, so daß bei einem Aufprall, insbesondere einem Frontaufprall eine vom befestigten Kindersitz ausgehende Kraft unmittelbar in den Fahrzeugsitz, insbesondere in dessen Oberrahmen eingeleitet wird. Bei einem höhenverstellbaren Fahrzeugsitz, insbesondere mit einer Schwenkhebelanordnung wird eine eingeleitete Zugkraft über den Höheneinsteller in die Führungsschienen am Fahrzeugboden abgestützt. Um vorhandene serienmäßige Sitzstrukturen, besonders die mehrfach einstellbaren Sitze, in ihrer Kinematik und ihren Stellsystemen nicht über Gebühr verstärken zu müssen, dient die Erfindung dazu, die Krafteinleitung günstiger zu gestalten.

Aufgabe der Erfindung ist es, ein Rückhaltesystem der eingangs genannten Art so weiterzubilden, daß die Krafteinleitung über den Fahrzeugsitz günstiger gestaltet wird.

Diese Aufgabe wird mit den Merkmalen des Anspruchs 1 gelöst.

Gemäß Anspruch 1 ist wenigstens eine Rastteil-Arretiervorrichtung für die Rastteile vorgesehen, die unmittelbar oder mittelbar die Überführung der Rastteile von der Ruhestellung in die Bereitschaftsstellung in der kraftmäßig günstigsten Position der Höheneinstellung und/oder bei hinterster Längseinstellung des Fahrzeugsitzes freigibt.

Da z. B. bei einigen Konstruktionsarten nur bei höchster Höheneinstellung und/oder hinterster Längseinstellung des Fahrzeugsitzes die Rastteile in ihre Bereitschaftsstellung überführbar sind, kann auch nur unter diesen Bedingungen der Kindersitz über die Schloßteile mit den Rastteilen verbunden werden. In der höchsten Position werden Zugkräfte nur direkt über gestreckte Gelenke aufgenommen, so daß der Höheneinsteller nicht oder nur gering belastet ist. Damit können die bisher verwendeten Höheneinsteller ohne Verstärkungen in Verbindung mit dem ISOFIX-Kindersitzsystem genutzt werden. Je nach den Gegebenheiten trifft dies auch für einen Längseinsteller zu, insbesondere wenn eine Kombination oder Kopplung zwischen Höheneinsteller und Längseinsteller vorliegt.

Je nach dem Aufbau der Rastteil-Arretiervorrichtung kann es möglich sein, nach dem Einbau des Kindersitzes in der höchsten und/oder hintersten Sitzposition diese Position wieder zu verstellen und damit wieder ungünstige Verhältnisse für eine Krafteinleitung herbeizuführen. Um dies auszuschließen, wird in einer Weiterbildung vorgeschlagen, zudem eine Sitz-Arretiervorrichtung vorzusehen, die unmittelbar oder mittelbar die höchste Höheneinstellung und/oder die hinterste Längseinstellung des Fahrzeugsitzes in der Bereitschaftsstellung der Rastteile arretiert.

Die vorstehenden Arretierungen sind besonders vorteilhaft in Verbindung mit einem Frontsitz verwendbar, bei dem die Höheneinstellung über eine Schwenkhebelanordnung erfolgt.

Grundsätzlich können die Rastteile mit unterschiedlichen Mitteln in der Ruhestellung gegen eine Verrastung mit dem Kindersitz gesperrt und in der Bereitschaftsstellung freigegeben sein. Insbesondere können solche Rastteile aus einer unzugänglichen Stellung auch linear ausgefahren werden. Besonders vorteilhaft und einfach sind die vorstehend genannten Arretierungen bei Rastteilen als gekoppelten Schwenkbügel verwendbar, die zwischen der Sitzfläche und der Lehnenunterseite des Fahrzeugsitzes gelagert sind und von einer versenkten, quergestellten Ruhelage in eine nach vorne abstehende Bereitschaftslage schwenkbar sind. Damit ergeben sich einfache, geometrische Zuordnungen mit einfach herstellbaren, mechanischen Verbindungen. Insbesondere können hierbei die an sich bekannten ISOFIX-Schloßteile am Kindersitz in der Form von Hakenfallen an ausfahrbaren Auslegern benutzt werden.

Ebenso kann für die Schwenkbetätigung der Schwenkbügel eine an sich bekannte Druckknopfbetätigung verwendet werden.

Grundsätzlich können sowohl die Rastteil-Arretiervorrichtung als auch die Sitz-Arretiervorrichtung unterschiedlich mit an sich bekannten Mitteln aufgebaut werden. Beispielsweise sind zur Erkennung der höchsten und hintersten Sitzeinstellung elektrische Endschalter möglich, die mittels elektromagnetischen Stellgliedern die erforderlichen Arretierungen steuern. Ebenso sind rein mechanische Anordnungen mit Gestängen möglich.

In einer bevorzugten Ausführungsform werden jedoch Bowdenzüge, vorzugsweise federbelastete Bowdenzüge verwendet, die über Schiebestücke bei der Anlage an zugeordneten Anschlägen die erforderlichen Steuerungen und Arretierungen bewirken.

In einer besonders bevorzugten Ausführungsform umfaßt die Sitz-Arretiervorrichtung eine fahrzeugfeste Rastschiene und ein am Fahrzeugsitz betätigbar gelagertes, zugeordnetes Rastelement. Über das Rastelement erfolgt vorteilhaft eine Verrastung des Sitzgestells mit der Rastschiene vorzugsweise durch eine Nockeneinsteuerung. Eine Kraft auf die ISOFIX-Verbindung wird damit vorteilhaft unmittelbar in die Rastschiene eingeleitet.

Die Verrastung des Rastelements in der Rastschiene kann hier permanent erfolgen, d. h. zugleich mit der Überführung der Rastteile in die Bereitschaftsstellung wird eine Verrastung des Sitzgestells über das Rastelement an der fahrzeugfesten Rastschiene vorgenommen. Alternativ oder zusätzlich dazu kann eine solche Verrastung erst durch eine Krafteinleitung bei einem Fahrzeugaufprall erfolgen. Dazu wird ein Deformationsglied vorgeschlagen, das das Rastelement im Normalfall außer Eingriff hält und welches unter Einwirkung einer vorgegebenen, eingeleiteten Zugkraft für einen Rasteingriff des Rastelements deformierbar ist.

Anhand einer Zeichnung wird die Erfindung näher erläutert.

Es zeigen:
- Fig. 1: eine schematische Seitenansicht eines Frontsitzes eines Kraftfahrzeuges mit einem Rückhaltesystem für einen Kindersitz,
- Fig. 2: eine schematische Schnittdarstellung entlang der Linie A-A der Fig. 1 und
- Fig. 3: eine schematische Darstellung eines an einem Fahrzeugsitz betätigbar gelagerten Rastelements.

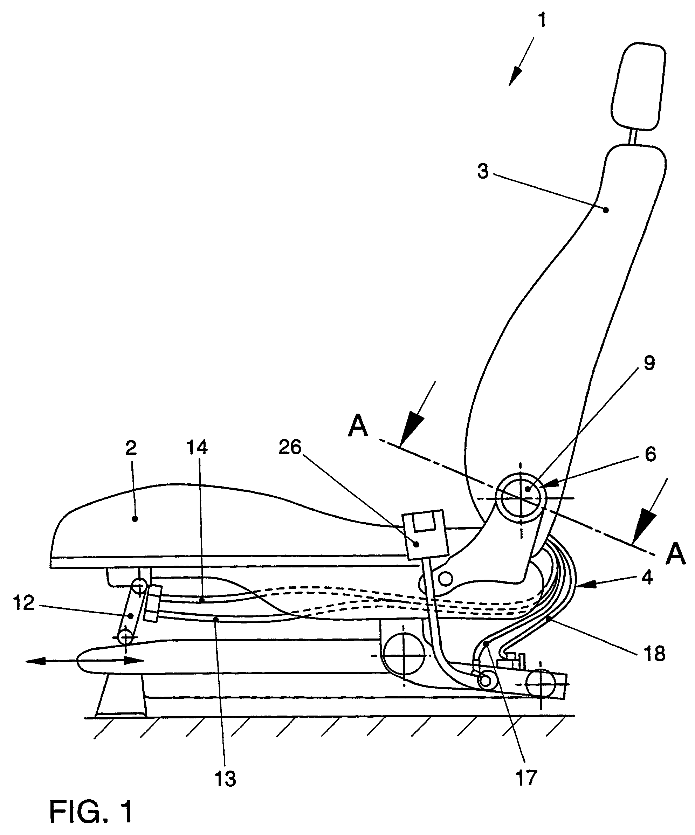

In der Fig. 1 ist schematisch ein als Dreibeinsitz ausgebildeter Frontsitz 1 dargestellt, der aus einem Sitzteil 2und einer Sitzlehne 3 aufgebaut ist. Zur Höhen- und Längseinstellung des Frontsitzes 1 umfaßt dieser eine Höheneinstellvorrichtung und eine Längseinstellvorrichtung.

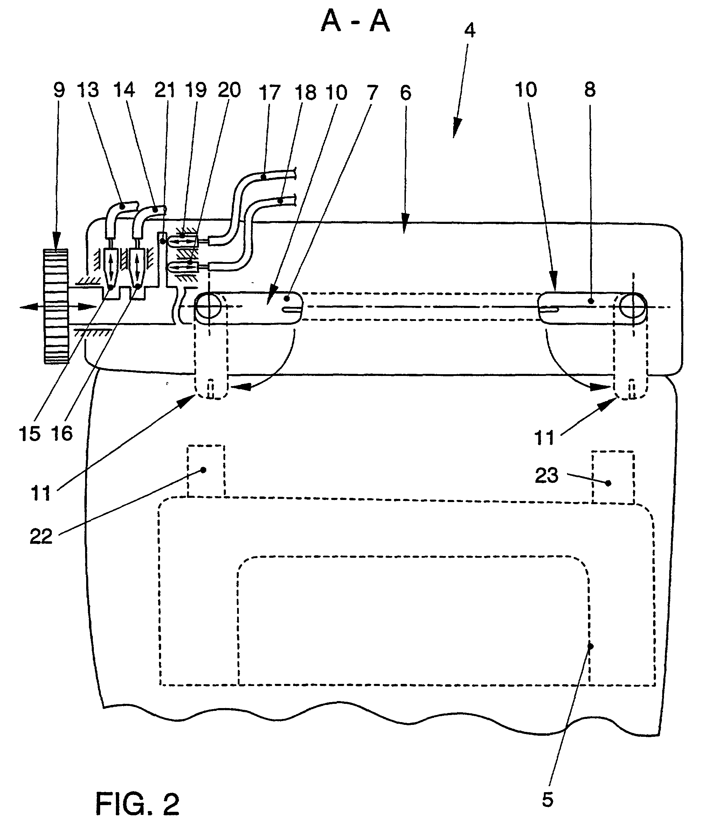

Wie dies insbesondere aus der Fig. 2 ersichtlich ist, die einen Schnitt entlang der Linie A-A der Fig. 1 darstellt, umfaßt der Frontsitz 1 ein Rückhaltesystem 4 für einen im Kraftfahrzeug mitgeführten und auf dem Frontsitz 1 anordbaren Kindersitz 5, der in der Fig. 2 nur teilweise und strichliert dargestellt ist. Dieses Rückhaltesystem 4 weist eine im unteren Lehnenbereich in Sitzteilhöhe quer durch die Sitzlehne 3 verlaufende Rastteilanordnung 6 auf, an der beabstandet zwei miteinander gekoppelte Schwenkbügel 7, 8 als Rastteile ausgebildet sind.

Die Verschwenkung der Schwenkbügel 7, 8 aus ihrer in der Fig. 2 mit durchgezogenen Linien dargestellten Ruhestellung 10 in die strichliert eingezeichnete Bereitschaftsstellung 11 erfolgt auf herkömmliche Weise mittels eines mit den Schwenkbügeln 7, 8 gekoppelten Druckknopfs 9. Das Rückhaltesystem 4 ist dabei so aufgebaut, wie dies in der Fig. 2 lediglich schematisch dargestellt ist, daß der Druckknopf 9 nur dann zum Verschwenken der Schwenkbügel 7, 8 aus der Ruhestellung 10 in die Bereitschaftsstellung 11 betätigt werden kann, wenn sich der Frontsitz 1 in seiner höchsten Höheneinstellung und seiner hintersten Längseinstellung befindet, da nur in dieser Position des Frontsitzes 1 die Zugkräfte über gestreckte Gelenke aufgenommen werden können, so daß ein Höheneinsteller 12 nicht oder nur gering belastet wird.

Zur Freigabe des Druckknopfes 9 zum Verschwenken der Schwenkbügel 7, 8 aus der Ruhestellung 10 in die Bereitschaftsstellung 11 umfaßt das Rückhaltesystem 4 einen ersten, federbelasteten Bowdenzug 13 und einen zweiten, federbelasteten Bowdenzug 14. Diese umfassen an ihrem druckknopfnahen Ende jeweils ein Schiebestück 15, 16, die so mit der Höheneinstellvorrichtung und der Längseinstellvorrichtung des Frontsitzes 1 gekoppelt sind, daß diese in der höchsten Höheneinstellung und der hintersten Längseinstellung den Druckknopf 9 zur Betätigung freigeben, wie dies in der Fig. 2 schematisch dargestellt ist. Befindet sich der Frontsitz 1 nicht in seiner höchsten Höheneinstellung und/oder seiner hintersten Längseinstellung, greifen beide oder auch nur eines der Schiebestücke 15, 16 in die Aussparungen am Druckknopf 9 ein und verhindern somit eine Betätigung des Druckknopfs 9. Die Schwenkbügel 7, 8 befinden sich in diesem Falle in ihrer Ruhestellung 10.

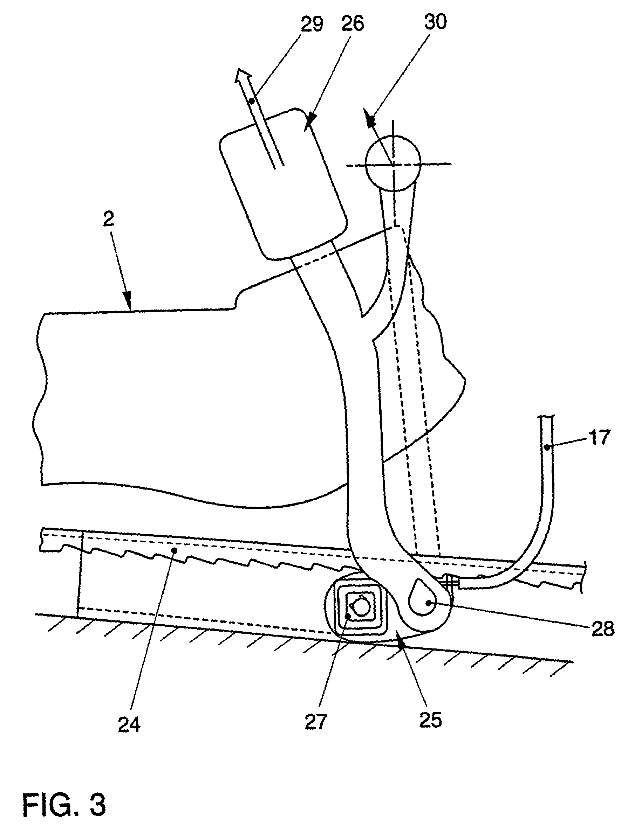

Um zu verhindern, daß in dieser höchsten Höheneinstellung und hintersten Längseinstellung des Frontsitzes 1 bei ausgeschwenkten Schwenkbügeln 7, 8 eine Sitzverstellung erfolgen kann, ist weiter ein dritter, federbelasteter Bowdenzug 17 und ein vierter, federbelasteter Bowdenzug 18 als Frontsitz-Arretiervorrichtung vorgesehen. Diese weisen an ihrem druckknopfnahen Ende jeweils ein Schiebestück 19, 20 auf, die im Falle der Druckknopfbetätigung 9 derart verschoben werden, daß Schiebestücke am anderen Ende des dritten und vierten Bowdenzugs 17, 18 den Frontsitz 1 in der höchsten Höheneinstellung und hintersten Längseinstellung verriegeln, wie dies in der Fig. 3 lediglich schematisch und beispielhaft mit dem dritten Bowdenzug dargestellt ist.

Wie der schematischen Darstellung der Fig. 2 weiter zu entnehmen ist, kann der Kindersitz 5 mit an den unteren, hinteren Seitenbereichen angeordneten ISOFIX-Schloßteilen 22, 23 mit den in der Bereitschaftsstellung 11 ausgeschwenkten Schwenkbügeln 7, 8 des Rückhaltesystems 4 in Eingriff gebracht werden.

Wie in der Fig. 3 lediglich schematisch und beispielhaft dargestellt ist, kann zur Arretierung des Frontsitzes 1 zusätzlich auch eine fahrzeugfeste Rastschiene 24 und ein am Frontsitz 1 betätigbar gelagertes, entsprechend zugeordnetes Rastelement 25 vorgesehen sein. Die die Schwenkbügel 7, 8 aufweisende Rastteilanordnung 6 ist hier über eine Gurtschloßanordnung 26 mit dem Rastelement 25 verbunden. Das Rastelement 25 weist ein Deformationsglied 27 auf, das einen Nocken 28 des Rastelements 25 im Normalfall außer Eingriff mit der Rastschiene 24 hält und das unter Einwirkung einer vorgegebenen Zugkraft, die in der Fig. 3 durch die Pfeile 29, 30 dargestellt ist, für einen Rasteingriff des Rastelements 25 über den Nocken 28 deformierbar ist.

### BEZUGSZEICHENLISTE

- 1: Frontsitz
- 2: Sitzteil
- 3: Sitzlehne
- 4: Rückhaltesystem
- 5: Kindersitz
- 6: Rastteilanordnung
- 7: Schwenkbügel
- 8: Schwenkbügel
- 9: Druckknopf
- 10: Ruhestellung
- 11: Bereitschaftsstellung
- 12: Höheneinsteller
- 13: erster Bowdenzug
- 14: zweiter Bowdenzug
- 15: Schiebestück
- 16: Schiebestück
- 17: dritter Bowdenzug
- 18: vierter Bowdenzug
- 19: Schiebestück
- 20: Schiebestück
- 21: Anschlag
- 22: Schloßteil
- 23: Schloßteil
- 24: Rastschiene
- 25: Rastelement
- 26: Gurtschloßanordnung
- 27: Deformationsglied
- 28: Nocken
- 29: Pfeil
- 30: Pfeil

## Patentansprüche

1. Rückhaltesystem für einen in einem Kraftfahrzeug mitgeführten, auf einem Fahrzeugsitz abgestellten Kindersitz,
mit einer Höheneinstellvorrichtung und/oder einer Längseinstellvorrichtung für den Fahrzeugsitz,
mit Schloßteilen an unteren hinteren Seitenbereichen des Kindersitzes,
mit am Fahrzeugsitz befestigten, den Schloßteilen zugeordneten Rastteilen, die durch ein Betätigungsglied aus einer Ruhestellung in eine Bereitschaftsstellung überführbar sind, wobei nur in der Bereitschaftsstellung die Schloßteile am Kindersitz mit den Rastteilen am Fahrzeugsitz in Eingriff bringbar sind,
**dadurch gekennzeichnet,**
**daß** wenigstens eine Rastteil-Arretiervorrichtung (13, 14) für die Rastteile (7, 8) vorgesehen ist, die unmittelbar oder mittelbar die Überführung der Rastteile (7, 8) von der Ruhestellung (10) in die Bereitschaftsstellung (11) nur bei höchster Höheneinstellung und/oder bei hinterster Längseinstellung des Fahrzeugsitzes (1) freigibt.

2. Rückhaltesystem nach Anspruch 1, **dadurch gekennzeichnet, daß** wenigstens eine Sitz-Arretiervorrichtung (17, 18) vorgesehen ist, die unmittelbar oder mittelbar die höchste Höheneinstellung und/oder die hinterste Längseinstellung des Fahrzeugsitzes (1) in der Bereitschaftsstellung (11 ) der Rastteile (7, 8) arretiert.

3. Rückhaltesystem nach Anspruch 1 oder Anspruch 2, **dadurch gekennzeichnet, daß** der Fahrzeugsitz (1) ein Dreibeinsitz oder parallelschienengeführt, insbesondere ein Frontsitz ist.

4. Rückhaltesystem nach einem der Ansprüche 1 bis 3, **dadurch gekennzeichnet, daß** die Höheneinstellung eine Schwenkhebelanordnung enthält.

5. Rückhaltesystem nach einem der Ansprüche 1 bis 4, **dadurch gekennzeichnet, daß** zwei beabstandete Rastteile (7, 8) als gekoppelte Schwenkbügel ausgebildet sind, die zwischen der Sitzfläche (2) und der Lehnenunterseite des Fahrzeugsitzes (1) gelagert sind und von einer versenkten, etwa in Fahrzeugquerrichtung liegenden Ruhestellung (10) in eine zur Sitzfläche (2) vorstehende, etwa in Fahrzeuglängsrichtung liegenden Bereitschaftsstellung (11) schwenkbar sind.

6. Rückhaltesystem nach einem der Ansprüche 1 bis 5, **dadurch gekennzeichnet, daß** die Schloßteile (22, 23) am Kindersitz (5) als Hakenfallen mit federbelasteten Rastnasen ausgebildet sind, die an vorzugsweise am Kindersitz (5) nach hinten ausfahrbaren Auslegern angebracht sind.

7. Rückhaltesystem nach einem der Ansprüche 1 bis 6, **dadurch gekennzeichnet, daß** das Betätigungsglied durch einen an der Sitzseite angebrachten Druckknopf (9) betätigbar ist und die Rastteil-Arretiervorrichtung (13, 14) an der Druckknopfbetätigung eingreift und/oder die Sitz-Arretiervorrichtung (17, 18) durch die Druckknopfbetätigung betätigbar ist.

8. Rückhaltesystem nach einem der Ansprüche 1 bis 7, **dadurch gekennzeichnet, daß** die Rastteil-Arretiervorrichtung (13, 14) wenigstens ein Übertragungsselement, vorzugsweise einen federbelasteten Bowdenzug umfaßt, der über Schiebestücke (15, 16) an Anschlägen entsprechend der höchsten Höheneinstellung und/oder hintersten Längseinstellung des Fahrzeugsitzes zur Freigabe der Überführung der Rastteile (7, 8) in die Bereitschaftsstellung (11) verstellbar ist.

9. Rückhaltesystem nach einem der Ansprüche 1 bis 8, **dadurch gekennzeichnet, daß** die Sitz-Arretiervorrichtung (17, 18) wenigstens ein Übertragungselement, vorzugsweise einen federbelasteten Bowdenzug umfaßt, der über ein Schiebestück (19, 20) an einem Anschlag entsprechend einer Bereitschaftsstellung (11) eines Rastteils (7, 8) zur Arretierung der Höheneinstellung und/oder Längseinstellung verstellbar ist.

10. Rückhaltesystem nach einem der Ansprüche 1 bis 9, **dadurch gekennzeichnet, daß** die Sitz-Arretiervorrichtung (17, 18) eine fahrzeugfeste Rastschiene (24) und ein am Fahrzeugsitz (1) betätigbar gelagertes, zugeordnetes Rastelement (25) aufweist.

11. Rückhaltesystem nach Anspruch 10, **dadurch gekennzeichnet, daß** das verrastbare Rastelement (25) durch ein mit den Rastteilen (7, 8) unmittelbar oder mittelbar verbundenes Halteteil betätigbar ist dergestalt, daß ein Deformationsglied (27) das Rastelement (25) außer Eingriff hält und das Deformationsglied (27) unter Einwirkung einer vorgegebenen Zugkraft zur Verrastung des Rastelements (25) deformierbar ist.

## Claims

1. Retaining system for a child's seat carried in a vehicle and fitted to a vehicle seat,
with a height-adjustment device and/or a longitudinal adjustment device for the vehicle seat,
with locking components in lower, rear, lateral regions of the child's seat,
with latch components attached to the vehicle seat and allocated to the locking components, which can be displaced by an activation element from a rest position into a ready position, wherein the locking components on the child's seat can only engage with the latch components on the vehicle seat in the ready position,
**characterised in that**,
at least one latch-component locking mechanism (13,14) is provided for the latch components (7,8), which either directly or indirectly releases the displacement of the latch components (7,8) from a rest position (10) into a ready position (11) only when the vehicle seat (1) is set to the highest height adjustment and/or the rearmost longitudinal adjustment.

2. Retaining system according to claim 1,
**characterised in that** at least one seat locking device (17,18) is provided, which, in the ready position (11) of the latch components (7,8), either directly or indirectly locks the highest height setting and/or the rearmost longitudinal setting of the vehicle seat (1).

3. Retaining system according to claim 1 or 2,
**characterised in that** the vehicle seat (1) is a three-legged seat or a seat guided on parallel rails, especially a front seat.

4. Retaining system according to any one of claims 1 to 3, **characterised in that** the height adjustment contains a swivelling lever arrangement.

5. Retaining system according to any one of claims 1 to 4, **characterised in that** two latch components (7,8) disposed at a distance from one another are designed as coupled, swivelling brackets, which are mounted between the seat surface (2) and the lower side of the backrest of the vehicle seat (1) and can be rotated from a lower, resting position, orientated approximately in the transverse direction of the vehicle, into a ready position (11) projecting relative to the seat surface (2) and orientated approximately in the longitudinal direction of the vehicle.

6. Retaining system according to any one of claims 1 to 5, **characterised in that** the locking components (22,23) on the child's seat (5) are designed as hook-shaped catches with spring-loaded latch projections, which are attached to extendible arms on the child's seat (5), which are preferably extendible to the rear.

7. Retaining system according to any one of claims 1 to 6, **characterised in that** the activation element can be activated by a push button (9) attached at one side of the seat, and that the latch-component locking mechanism (13,14) engages with the push-button activation element, and/or that the seat-locking device (17,18) can be activated by the push-button activation.

8. Retaining system according to any one of claims 1 to 7, **characterised in that** the latch-component locking mechanism (13,14) provides at least one transmission element, preferably a spring-loaded Bowden cable, which can be adjusted via slide elements (15,16) on stops corresponding to the highest height setting and/or the rearmost longitudinal setting of the vehicle seat in order to release the displacement of the latch components (7,8) into the ready position (11).

9. Retaining system according to any one of claims 1 to 8, **characterised in that** the seat locking device (17,18) provides at least one transmission element, preferably a spring-loaded Bowden cable, which can be adjusted via a slide element (19,20) on a stop corresponding to a ready position (11) of a latch component (7,8) in order to lock the height setting and/or longitudinal setting.

10. Retaining system according to any one of claims 1 to 9, **characterised in that** the seat locking device (17,18) provides a latch rail (24) fixed to the vehicle and an allocated latch element (25) mounted on the vehicle seat (1) in a manner capable of being activated.

11. Retaining system according to claim 10,
**characterised in that** the lockable latch element (25), can be activated by a holding component connected directly or indirectly to the latch components (7,8) in such a manner that a deformation element (27) holds the latch element (25) out of engagement, and that the deformation element (27) can be deformed subject to the influence of a predefined tensile force in order to lock the latch element (25).

## Revendications

1. Système de retenue pour un siège pour enfant transporté dans un véhicule automobile et installé sur un siège de véhicule,
avec un dispositif de réglage de la hauteur et/ou un dispositif de réglage de la longueur du siège de véhicule,
avec des pièces de verrouillage sur les zones latérales inférieures arrière du siège pour enfant,
avec des pièces d'encliquetage associées aux pièces de verrouillage, fixées sur le siège de véhicule, qui peuvent être déplacées d'une position de repos à une position de disponibilité au moyen d'un organe d'actionnement, les parties de verrouillage sur le siège pour enfant ne pouvant être mises en prise avec les pièces d'encliquetage sur le siège de véhicule que dans la position de disponibilité,
**caractérisé en ce qu'**au moins un dispositif d'arrêt pour pièces d'encliquetage (13, 14) est prévu pour les pièces d'encliquetage (7, 8), lequel libère directement ou indirectement le déplacement des pièces d'encliquetage (7, 8) de la position de repos (10) à la position de disponibilité (11) uniquement dans la position de réglage de hauteur la plus élevée et/ou dans la position de réglage de longueur la plus en retrait du siège de véhicule (1).

2. Système de retenue selon la revendication 1, **caractérisé en ce qu'**au moins un dispositif d'arrêt de siège (17, 18) est prévu, qui arrête directement ou indirectement la position de réglage de hauteur la plus élevée et/ou la position de réglage de longueur la plus en retrait du siège de véhicule (1) dans la position de disponibilité (11) des pièces d'encliquetage (7, 8).

3. Système de retenue selon la revendication 1 ou la revendication 2, **caractérisé en ce que** le siège de véhicule (1) est un siège à trois pieds ou guidé sur des rails parallèles et en particulier un siège avant.

4. Système de retenue selon l'une des revendications 1 à 3, **caractérisé en ce que** le dispositif de réglage de la hauteur comporte un levier de pivotement.

5. Système de retenue selon l'une des revendications 1 à 4, **caractérisé en ce que** deux pièces d'encliquetage espacées (7, 8) sont configurées sous forme d'étriers de pivotement couplés, qui sont situées entre la surface d'assise (2) et le dessous du dossier du siège de véhicule (1) et peuvent être pivotées d'une position de repos encastrée (10), située à peu près dans le sens transversal du véhicule (1) à une position de disponibilité (11) saillante par rapport à la surface d'assise (2), située à peu près dans le sens de la longueur de l'automobile.

6. Système de retenue selon l'une des revendications 1 à 5, **caractérisé en ce que** les pièces de verrouillage (22, 23) sur le siège pour enfant (5) sont configurées sous forme de trappes pour crochets avec des nez d'encliquetage commandés par ressort qui sont installés de préférence sur des bras, pouvant être déployés vers l'arrière sur le siège pour enfant (5).

7. Système de retenue selon l'une des revendications 1 à 6, **caractérisé en ce que** l'organe d'actionnement est actionnable au moyen d'un bouton-poussoir (9) disposé sur le côté du siège et le dispositif d'arrêt pour pièces d'encliquetage (13, 14) s'enclenche sur l'actionnement du bouton-poussoir et/ou le dispositif d'arrêt du siège (17, 18) est actionnable par l'actionnement du bouton-poussoir.

8. Système de retenue selon l'une des revendications 1 à 7, **caractérisé en ce que** le dispositif d'arrêt pour pièces d'encliquetage (13, 14) comprend au moins un élément de transmission, de préférence un câble Bowden commandé par ressort qui est réglable par l'intermédiaire de pièces coulissantes (15, 16) sur des butées en fonction de la position de réglage de hauteur la plus élevée et/ou de la position de réglage de longueur la plus en retrait du siège de véhicule pour la libération du déplacement des pièces d'encliquetage (7, 8) vers la position de disponibilité (11).

9. Système de retenue selon l'une des revendications 1 à 8, **caractérisé en ce que** le dispositif d'arrêt du siège (17, 18) comprend au moins un élément de transmission, de préférence un câble Bowden commandé par ressort qui est réglable par l'intermédiaire d'une pièce coulissante (19, 20) sur une butée en fonction d'une position de disponibilité (11) d'une pièce d'encliquetage (7, 8) pour l'arrêt du réglage de la hauteur et/ou du réglage de la longueur.

10. Système de retenue selon l'une des revendications 1 à 9, **caractérisé en ce que** le dispositif d'arrêt du siège (17, 18) comporte un rail d'arrêt (24) fixé au véhicule et un élément d'encliquetage (25) associé, prévu sur le siège de véhicule (1) de manière à pouvoir être actionné.

11. Système de retenue selon la revendication 10, **caractérisé en ce que** l'élément d'encliquetage (25) encliquetable peut être actionné directement ou indirectement au moyen d'une pièce de maintien raccordée aux pièces d'encliquetage (7, 8) de manière à ce qu'un élément de déformation (27) empêche l'élément d'encliquetage (25) d'être en prise et que l'élément de déformation (27) est déformable sous l'effet d'une force de traction prédéfinie pour l'enclenchement de l'élément d'encliquetage (25).
